# EUROPÄISCHE PATENTSCHRIFT

(11) **EP 3 509 884 B1**
(45) Veröffentlichungstag und Bekanntmachung des Hinweises auf die Patenterteilung: **07.10.2020**
(21) Anmeldenummer: 17752112.7
(22) Anmeldetag: 11.08.2017
(51) Int. Cl.: B60K 1/04, B60L 53/12, B60L 53/34, B60L 53/38, B60L 53/39, H02J 50/10, H02J 50/90, H02J 7/02, B60K 6/20, H01F 38/14

(54) **HYBRIDFAHRZEUG MIT INDUKTIVER LADEMÖGLICHKEIT**
HYBRID VEHICLE INCLUDING A CHARGING POSSIBILITY
VÉHICULE HYBRIDE AVEC DISPOSITIF DE CHARGEMENT

(30) Priorität: 08.09.2016 DE 102016217063
(43) Veröffentlichungstag der Anmeldung: 17.07.2019
(73) Patentinhaber: Bayerische Motoren Werke Aktiengesellschaft, 80809 München (DE)
(72) Erfinder: GLANZER, Michael, 85630 Grasbrunn (DE)
(86) Internationale Anmeldenummer: PCT/EP2017/070477
(87) Internationale Veröffentlichungsnummer: WO 2018/046236

(56) Entgegenhaltungen:
- DE-A1-102010 054 909
- DE-A1-102011 089 339
- DE-A1-102011 108 546
- DE-A1-102012 217 779
- DE-A1-102013 214 311
- DE-A1-102014 018 754
- DE-T5-112013 006 982

## Beschreibung

Vorliegende Erfindung betrifft ein Hybridfahrzeug mit einer induktiven Lademöglichkeit.

Hier betrachtete Fahrzeuge umfassen sowohl eine elektrische Maschine zum Antreiben des Fahrzeugs als auch einen Verbrennungsmotor. Mit dem Verbrennungsmotor wird elektrische Energie zum Laden einer Batterie des Fahrzeugs erzeugt und/oder der Verbrennungsmotor wird direkt zum Antreiben des Fahrzeugs genutzt.

Die Druckschrift DE 10 2012 217 779 A1 zeigt solch ein Fahrzeug mit einer induktiven Lademöglichkeit für die Batterie. Dabei ist in oder unter der Oberfläche (beispielsweise einer Parkfläche) eine Primärspule vorgesehen. Im Fahrzeug befindet sich eine Sekundärspule. Bei ausreichend kleinem Abstand zwischen der Primärspule und der Sekundärspule kann relativ effizient elektrische Energie zum Laden der Batterie im Fahrzeug übertragen werden. Um einen möglichst kleinen Abstand zwischen den beiden Spulen beim Laden zu ermöglichen, wird in DE 10 2012 217 779 A1 vorgeschlagen, die Sekundärspule in der Karosserie des Fahrzeugs anzuordnen und beim Ladevorgang die gesamte Karosserie gegenüber dem Fahrwerk abzusenken.

DE102011089339A1 zeigt ein Hybridfahrzeug mit einer separaten Einrichtung zum Absenken der Sekundärspule.

DE 10 2014 018754 A1 zeigt ein Fahrzeug, bei dem die Sekundärspule in die Ölwanne eingebaut ist.

Es ist eine Aufgabe vorliegender Erfindung, ein Fahrzeug, insbesondere ein Hybridfahrzeug mit induktiver Lademöglichkeit, anzugeben, das auf einfache, wartungsarme und energieeffiziente Art ein Absenken des Sekundärspule ermöglicht.

Die Lösung der Aufgabe erfolgt durch die Merkmale des Anspruchs 1. Die Unteransprüche haben vorteilhafte Ausgestaltungen der Erfindung zum Gegenstand.

Somit wird die Aufgabe gelöst durch ein Fahrzeug. Bei dem Fahrzeug handelt es sich insbesondere um ein Hybridfahrzeug. Das Fahrzeug umfasst zumindest eine elektrische Maschine zum Antreiben des Fahrzeugs. Die elektrische Maschine dient in erster Linie als Elektromotor, kann jedoch in gewissen Fahrsituationen auch generatorisch betrieben werden. Ferner umfasst das Fahrzeug eine Batterie zur Versorgung der elektrischen Maschine mit elektrischer Energie.

Im Fahrzeug befindet sich ein Verbrennungsmotor. Der Verbrennungsmotor kann insbesondere mit Benzin, Diesel oder Gas betrieben werden. Bei dem Verbrennungsmotor kann es sich um einen kleinen Verbrennungsmotor handeln, der lediglich als Range-Extender genutzt wird. In seiner Funktion als Range-Extender erzeugt der Verbrennungsmotor elektrische Energie zum Aufladen der Batterie und/oder zum Betreiben der elektrischen Maschine. Hierzu ist der Verbrennungsmotor mit einem Generator antriebsverbunden. Zusätzlich oder alternativ ist auch vorgesehen, dass der Verbrennungsmotor zum direkten, mechanischen Antreiben des Fahrzeugs genutzt wird und/oder die elektrische Maschine mittels des Verbrennungsmotors generatorisch betrieben wird.

An der Unterseite des Verbrennungsmotors ist eine Sekundärspule befestigt. Der Einfachheit halber wird hier von einer Sekundärspule gesprochen. Tatsächlich kann es sich um eine Kombination mehrerer Spulen handeln. Die Sekundärspule ist elektrisch leitend mit der Batterie verbunden und für eine induktive Ladung der Batterie ausgebildet. Insbesondere ist vorgesehen, dass an einer Ladestation die Sekundärspule in die Nähe einer Primärspule gebracht wird. Die Primärspule befindet sich an oder in einer Oberfläche, beispielsweise der Straße oder einer Parkfläche. Durch Induktion kann von der Primärspule auf die Sekundärspule elektrische Energie zum Laden der Batterie im Fahrzeug übertragen werden. Zusätzlich zu der induktiven Lademöglichkeit, kann am Fahrzeug auch eine Möglichkeit zur kabelgebundenen Aufladung der Batterie vorgesehen sein.

Das erfindungsgemäße Fahrzeug umfasst eine höhenverstellbare Motorlagerung zur Befestigung des Verbrennungsmotors an einem Fahrwerk des Fahrzeugs. Die Motorlagerung ist dazu ausgebildet, für einen Ladevorgang den Verbrennungsmotor samt Sekundärspule gegenüber dem Fahrwerk abzusenken.

Erfindungsgemäß wird also ein ohnehin schon vorhandenes Element, nämlich die Motorlagerung, dazu genutzt, um die Sekundärspule abzusenken. Gleichzeitig wird darauf geachtet, dass ein relativ leichtes Bauteil, nämlich der Verbrennungsmotor und nicht die gesamte Karosserie abgesenkt wird. Dadurch ist der Absenkvorgang relativ energieeffizient und die beweglichen Teile der Lagerung müssen nur für das relativ geringe Gewicht ausgelegt werden.

In bevorzugter Ausführung umfasst das Fahrwerk zumindest einen Achsträger. Der Achsträger kann auch als Fahrschemel oder Hilfsrahmen bezeichnet werden. Am Achsträger werden zwei gegenüberliegende Räder befestigt. Üblicherweise umfasst das Fahrzeug zwei Achsträger. Der Verbrennungsmotor ist vorzugsweise mittels der höhenverstellbaren Motorlagerung an einem der beiden Achsträger befestigt. Insbesondere weist der Achsträger einen Freiraum auf, durch den der Verbrennungsmotor nach unten abgesenkt werden kann.

Die Motorlagerung setzt sich vorzugsweise aus zwei, insbesondere drei oder vier, einzelnen Motorlagern zusammen.

Vorzugsweise ist vorgesehen, dass die Höhenverstellung der Motorlagerung hydraulisch, pneumatisch oder elektro-mechanisch erfolgt. Bei der hydraulischen oder pneumatischen Ausführung gibt es in der Motorlagerungen, insbesondere den einzelnen Motorlagern, sprechende Kammern, die vorzugsweise im normalen Betrieb des Fahrzeugs mit einem entsprechenden Druck gefüllt sind. Zum Absenken des Verbrennungsmotors wird der Druck aus diesen Kammern abgelassen. Bei der elektro-mechanischen Variante können entsprechende Elektromotoren zur Höhenverstellung des Verbrennungsmotors benutzt werden.

Im Fahrzeug befindet sich vorteilhafterweise ein Steuergerät zur Ansteuerung der Höhenverstellung der Motorlagerung. Das Steuergerät kann beispielsweise vom Fahrer und/oder von der externen Ladevorrichtung entsprechende Signale erhalten, um die Höhenverstellung der Motorlagerung anzusteuern.

Der Verbrennungsmotor weist üblicherweise eine Ölwanne auf. Die Sekundärspule ist insbesondere direkt unter der Ölwanne am Verbrennungsmotor befestigt. Sonders bevorzugt ist dabei vorgesehen, dass sich die Sekundärspule zwischen der Ölwanne und einer unter der Sekundärspule angeordneten Motorabschirmung befindet.

Die Sekundärspule befindet sich möglichst nah am Verbrennungsmotor, sodass im normalen Betrieb des Fahrzeugs die Sekundärspule höher liegt als die gewünschte Bodenfreiheitslinie des Fahrzeugs.

Weitere Einzelheiten, Merkmale und Vorteile der Erfindung ergeben sich aus der nachfolgenden Beschreibung und den Figuren. Es zeigen:
- Figur 1: eine schematische Ansicht des erfindungsgemäßen Fahrzeugs, und
- Figur 2: eine schematische Detailansicht des erfindungsgemäßen Fahrzeugs.

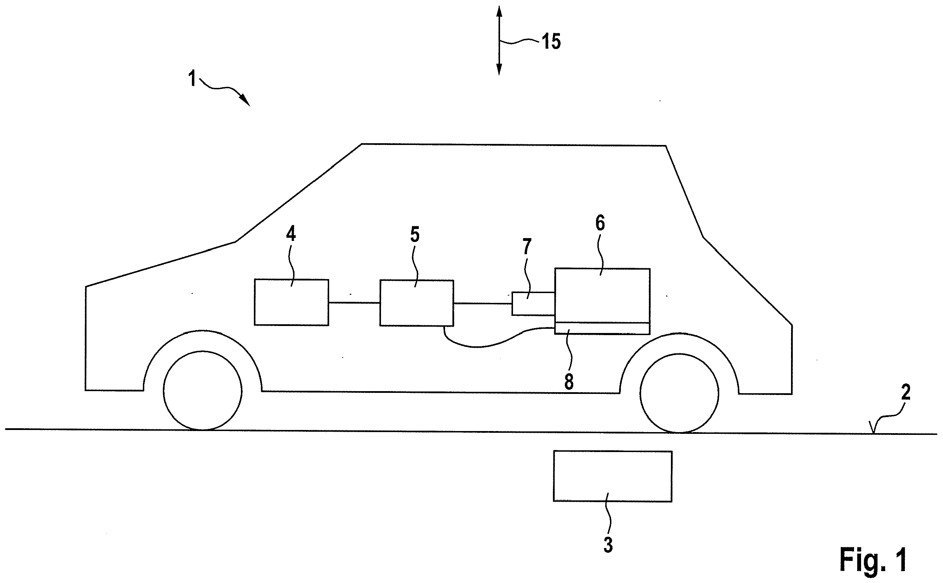

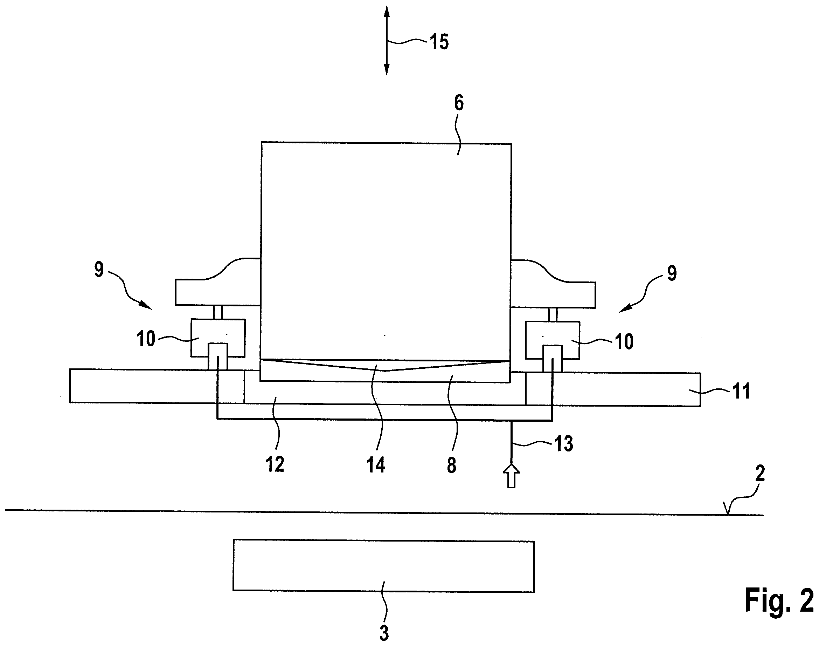

Die Figuren 1 und 2 zeigen in rein schematischen Darstellungen das erfindungsgemäße Fahrzeug 1, ausgebildet als Hybridfahrzeug mit induktiver Lademöglichkeit.

Das Fahrzeug 1 steht auf einer Oberfläche 2. In oder unter der Oberfläche 2 befindet sich eine Primärspule 3 einer externen Ladevorrichtung.

Das Fahrzeug 1 umfasst eine elektrische Maschine 4, die in erster Linie zum Antrieb des Fahrzeugs 1 angeordnet ist. Zur Versorgung der elektrischen Maschine 4 mit elektrischer Energie, befindet sich im Fahrzeug 1 eine Batterie 5.

Des Weiteren ist im Fahrzeug 1 ein Verbrennungsmotor 6 angeordnet. Der Verbrennungsmotor 6 ist mit einem Generator 7 antriebsverbunden. Über den Verbrennungsmotor 6 und den Generator 7 kann die Batterie 5 aufgeladen werden.

Je nach Ausgestaltung des Fahrzeugs 1, ist es zusätzlich oder alternativ auch möglich, den Verbrennungsmotor 6 mechanisch mit den Rädern des Fahrzeugs 1 zu verbinden, um so das Fahrzeug 1 direkt über den Verbrennungsmotor 6 anzutreiben. Des Weiteren ist es auch möglich, anstatt des Generators 7, die elektrische Maschine 4 über den Verbrennungsmotor 6 generatorisch zu betreiben.

An der Unterseite, also der der Oberfläche 2 zugewandten Seite des Verbrennungsmotors 6 ist eine Sekundärspule 8 am Verbrennungsmotor 6 befestigt. Die Sekundärspule 8 ist mit der Batterie 5 elektrisch leitend verbunden.

Figur 2 zeigt das Fahrwerk 11 und eine Motorlagerungen 9 zur Befestigung des Verbrennungsmotors 6 am Fahrwerk 11. Die Motorlagerungen 9 umfasst hierbei mehrere einzelne Motorlager 10.

Im gezeigten Ausführungsbeispiel sind die Motorlager 10 über eine Hydraulik 13 entlang einer Hochachse 15 höhenverstellbar. Dadurch ist es möglich, den Verbrennungsmotor 6 samt der daran befestigten Sekundärspule 8 entlang der Hochachse 15 abzusenken. Insbesondere befindet sich der Verbrennungsmotor 6 in oder über einen Freiraum 12 des Fahrwerks 11, sodass der Verbrennungsmotor 6 möglichst weit abgesenkt werden kann.

Im abgesenkten Zustand befindet sich die Sekundärspule 8 möglichst nahe an der Primärspule 3, sodass eine effiziente, induktive Ladung der Batterie 5 möglich.

Figur 2 zeigt rein schematisch eine Ölwanne 14 am unteren Bereich des Verbrennungsmotors 6. Die Sekundärspule 8 befindet sich vorzugsweise direkt unter dieser Ölwanne 14.

### Bezugszeichenliste:

- 1: Fahrzeug
- 2: Oberfläche
- 3: Primärspule
- 4: elektrische Maschine
- 5: Batterie
- 6: Verbrennungsmotor
- 7: Generator
- 8: Sekundärspule
- 9: Motorlagerung
- 10: Motorlager
- 11: Fahrwerk
- 12: Freiraum
- 13: Hydraulik
- 14: Ölwanne
- 15: Hochachse

## Patentansprüche

1. Fahrzeug (1), insbesondere Hybridfahrzeug mit induktiver Lademöglichkeit, umfassend
• eine elektrische Maschine (4) zum Antreiben des Fahrzeugs (1),
• eine Batterie (5) zur Versorgung der elektrischen Maschine (4),
• einen Verbrennungsmotor (6) zum Erzeugen elektrischer Energie und/oder direktem Antreiben des Fahrzeugs (1),
• eine an der Unterseite des Verbrennungsmotors (6) angeordnete Sekundärspule (8) für ein induktives Laden der Batterie (5), **gekennzeichnet durch**
• eine höhenverstellbare Motorlagerung (9) zur Befestigung des Verbrennungsmotors (6) an einem Fahrwerk (11) des Fahrzeugs (1),
• wobei die Motorlagerung (9) dazu ausgebildet ist, für einen Ladevorgang den Verbrennungsmotor (6) samt Sekundärspule (8) gegenüber dem Fahrwerk (11) abzusenken.

2. Fahrzeug nach Anspruch 1, wobei das Fahrwerk (11) einen Achsträger zur Befestigung von zwei gegenüberliegenden Rädern umfasst, und wobei der Verbrennungsmotor (6) mittels der Motorlagerung (9) an dem Achsträger befestigt ist.

3. Fahrzeug nach einem der vorhergehenden Ansprüche, wobei die Motorlagerung (9) zumindest zwei, vorzugsweise drei oder vier, einzelne Motorlager (10) umfasst.

4. Fahrzeug nach einem der vorhergehenden Ansprüche, wobei die Motorlagerung (9) hydraulisch, pneumatisch oder elektro-mechanisch höhenverstellbar ist.

5. Fahrzeug nach einem der vorhergehenden Ansprüche, wobei die Höhenverstellung der Motorlagerung (9) von einem Steuergerät des Fahrzeugs (1) ansteuerbar ist.

6. Fahrzeug nach einem der vorhergehenden Ansprüche, wobei die Sekundärspule (8) unter einer Ölwanne (14) des Verbrennungsmotors (6) angeordnet ist.

7. Fahrzeug nach Anspruch 6, wobei die Sekundärspule (8) zwischen der Ölwanne (14) des Verbrennungsmotors und einer unter der Sekundärspule (8) angeordneten Motorabschirmung angeordnet ist.

## Claims

1. Vehicle (1), in particular hybrid vehicle with inductive charging capability, comprising
• an electric machine (4) for driving the vehicle (1),
• a battery (5) for powering the electric machine (4),
• an internal combustion engine (6) for generating electrical energy and/or directly driving the vehicle (1),
• a secondary coil (8), which is arranged on the underside of the internal combustion engine (6), for inductive charging of the battery (5), **characterized by**
• a height-adjustable engine mount (9) for the fastening of the internal combustion engine (6) to a chassis (11) of the vehicle (1),
• wherein the engine mount (9) is designed to lower the internal combustion engine (6) together with the secondary coil (8) relative to the chassis (11) for a charging process.

2. Vehicle according to Claim 1, wherein the chassis (11) comprises a chassis subframe for the fastening of two opposite wheels, and wherein the internal combustion engine (6) is fastened by means of the engine mount (9) to the chassis subframe.

3. Vehicle according to any of the preceding claims, wherein the engine mount (9) comprises at least two, preferably three or four, individual engine mounts (10) .

4. Vehicle according to any of the preceding claims, wherein the engine mount (9) is hydraulically, pneumatically or electromechanically height-adjustable.

5. Vehicle according to any of the preceding claims, wherein the height adjustment of the engine mount (9) is controllable by a control unit of the vehicle (1) .

6. Vehicle according to any of the preceding claims, wherein the secondary coil (8) is arranged under an oil sump (14) of the internal combustion engine (6).

7. Vehicle according to Claim 6, wherein the secondary coil (8) is arranged between the oil sump (14) of the internal combustion engine and an engine shield arranged under the secondary coil (8).

## Revendications

1. Véhicule (1), notamment véhicule hybride à possibilité de chargement inductif, comprenant :
- une machine électrique (4) pour l'entraînement du véhicule (1),
- une batterie (5) pour l'alimentation de la machine électrique (4),
- un moteur à combustion (6) pour la génération d'énergie électrique et/ou l'entraînement direct du véhicule (1),
- une bobine secondaire (8) agencée sur le côté inférieur du moteur à combustion (6) pour un chargement inductif de la batterie (5), **caractérisé par**
- un montage de moteur ajustable en hauteur (9) pour la fixation du moteur à combustion (6) à un châssis (11) du véhicule (1),
- le montage de moteur (9) étant conçu pour abaisser le moteur à combustion (6) et la bobine secondaire (8) par rapport au châssis (11) pour un processus de chargement.

2. Véhicule selon la revendication 1, dans lequel le châssis (11) comprend un support d'essieu pour la fixation de deux roues opposées, et dans lequel le moteur à combustion (6) est fixé au support d'essieu au moyen du montage de moteur (9).

3. Véhicule selon l'une quelconque des revendications précédentes, dans lequel le montage de moteur (9) comprend au moins deux, de préférence trois ou quatre, paliers de moteur individuels (10).

4. Véhicule selon l'une quelconque des revendications précédentes, dans lequel le montage de moteur (9) est ajustable en hauteur hydrauliquement, pneumatiquement ou électro-mécaniquement.

5. Véhicule selon l'une quelconque des revendications précédentes, dans lequel l'ajustement en hauteur du montage de moteur (9) peut être commandé par un appareil de commande du véhicule (1).

6. Véhicule selon l'une quelconque des revendications précédentes, dans lequel la bobine secondaire (8) est agencée sous un carter d'huile (14) du moteur à combustion (6).

7. Véhicule selon la revendication 6, dans lequel la bobine secondaire (8) est agencée entre le carter d'huile (14) du moteur à combustion et un écran de moteur agencé sous la bobine secondaire (8).
